# EUROPEAN PATENT APPLICATION

(11) **EP 1 858 139 A2**
(43) Date of publication of application: **21.11.2007**
(21) Application number: 07108225.9
(22) Date of filing: 15.05.2007
(51) Int. Cl.: H02K 3/47, H02K 1/27, H02K 7/06

(54) **Miniature electric motor**

(30) Priority: 15.05.2006 US 800334 P
(71) Applicant: Sonion Horsens A/S, 8700 Horsens (DK)
(72) Inventor: Hansen, Kaj, DK-8700, Horsens (DK)
(74) Representative: Inspicos A/S

(57) **Abstract**

The present invention relates to miniature electro-dynamic motor comprising substantially concentrically arranged stator and rotor parts relative to a centre rotor axis, wherein the rotor part comprises a rotatably mounted permanent annular magnet fixedly arranged to a rotor shaft, and wherein the stator part comprises a plurality of electrically conductive stator windings having respective pairs of winding connections for individual receipt of electrical drive signals. The present invention further relates to a miniature vibrator applying a miniature electro-dynamic motor according to the present invention.

## Description

### FIELD OF THE INVENTION

The present invention relates to a miniature electro-dynamic motor for electro-mechanical devices, such as for miniature vibrators for cell phones. The stator windings of the miniature electro-dynamic motor are easy to assemble and they provide a significantly higher fill factor compared to conventional winding arrangements. In addition, the stator windings of the electro-dynamic motor according to the present invention provide easy and proper axial and radial alignment of the windings relative to a rotor. The present invention further relates to electro-mechanical vibrators applying such miniature electro-dynamic motor.

### BACKGROUND OF THE INVENTION

Various winding arrangements for electro-dynamic motors have been suggested in the patent literature over the years.

One particular interesting arrangement is suggested as prior art in GB 903,285 where six half windings are connected in a star-like winding arrangement where corresponding pairs of half windings are connected in series to form three complete windings. These three compete windings are arranged in a star-like arrangement with one wire end of each complete winding being connected to a common point whereas the three remaining wire ends are externally accessible for being connected to an electronic control circuit.

It is a disadvantage of the winding arrangement mentioned as prior art in GB 903,285 that due to the star-like arrangement of the windings two complete windings, i.e. four half windings (for example a1, a2, b1 and b2), are connected in series between two externally accessible winding ends - see Fig. 4 of GB 903,285. Thus, the individual windings (a1 and a2, b1 and b2, or c1 and c2) can not be driven independently.

It is an object of the present invention to provide a miniature electro-dynamic motor comprising a winding arrangement having a large fill factor. The increased fill factor of the winding arrangement inherently increases the available force from the miniature electro-dynamic motor according to the present invention.

It is a further object of the present invention to provide a miniature electro-dynamic motor comprising a stator winding arrangement which eases the mechanical assembling of miniature electro-dynamic motors.

It is a still further object of the present invention to provide a miniature electro-dynamic motor comprising a stator winding arrangement which allows effective and flexible control of the operation of the electro-dynamic motor according to the present invention.

### SUMMARY OF THE INVENTION

The above-mentioned objects are complied with by providing, in a first aspect, a miniature electro-dynamic motor comprising substantially concentrically arranged stator and rotor parts relative to a centre rotor axis, wherein the rotor part comprises a rotatably mounted permanent annular magnet fixedly arranged to a rotor shaft, and wherein the stator part comprises a plurality of electrically conductive stator windings having respective pairs of winding connections for individual receipt of electrical drive signals

It is an advantage of the arrangement of the electrically conductive stator windings according to the present invention that the angular spatial extension of the generated rotating magnetic field covers approximately 2/3 of the stator. With such a spatial extension of the rotating magnetic field special starting sequences or starting procedures can be completely avoided.

It is a further advantage of the stator windings according to the present invention that a motor applying this stator winding arrangement is capable of providing a force which is approximately twice the force provided by conventional winding arrangements. The fact that the available force is approximately doubled compared to conventional winding arrangements is due to the fact that the fill factor of the winding assembly according to the present invention is essentially doubled.

It is a still further advantage of the miniature electro-dynamic motor according to the present invention that the winding connections for individual receipt of electrical drive signals to each of the stator windings significantly increase the flexibility and applicability of the miniature electro-dynamic motor according to the present invention. For example, the polarity of an electrical drive signal provided to a given stator winding may be changes without affecting the drive signals to other stator windings. Thus, the miniature electro-dynamic motor according to the present invention is suitable for applications where a rapid change in the mode of operation may be required.

The plurality of electrically conductive stator windings may comprise a first stator winding comprising a first pair of electrically interconnected windings, said first pair comprising first and second windings each comprising opposing axially extending winding portions and opposing bridging portions connecting the opposing axially extending winding portions, wherein the opposing axially extending winding portions of the first winding abut respective opposing axially extending winding portions of the second winding.

The first pair of electrically interconnected windings may comprise winding connections adapted to be electrically connected to an electronic control circuit.

As mentioned above, the first stator winding may comprise opposing axially extending winding portions. An axially extending winding portion should be understood as a part of a winding which is arranged substantially parallel to the centre rotor axis.

The first and second windings may be electrically interconnected so that electrical currents flowing in two abutting or neighbouring axially extending winding portions generate magnetic fields in essentially the same directions. In this way a stronger magnetic field may be generated by passing current in the same direction through two abutting or neighbouring axially extending winding portions. This may be achieved by electrically connecting the first and the second winding in series.

Openings may exist between abutting or neighbouring bridging portions of the first and second windings. These openings may be adapted to receive the rotor shaft.

The second stator winding may further comprise a second pair of electrically interconnected windings, said second pair comprising third and fourth windings each comprising opposing axially extending winding portions and opposing bridging portions connecting the opposing axially extending winding portions, wherein the opposing axially extending winding portions of the third winding abut respective opposing axially extending winding portions of the fourth winding.

Similar to the first pair of electrically interconnected windings, the second pair of electrically interconnected windings may comprise winding connections adapted to be electrically connected to an electronic control circuit.

Each of the first and second pairs of electrically connected windings may form a radial oriented symmetry axis. The orientations of the radial symmetry axes may be defined by abutting or neighbouring bridging portions. The spatial orientation of the radial symmetry axis of the first pair may be different from the orientation of the radial symmetry axis of the second pair. Thus, the radial symmetry axes may be oriented differently in that an angle in the range 30-150 degrees may be provided between the radial symmetry axes. Preferably, the angle between the radial symmetry axes falls within the following ranges: 50-70 degrees or 80-100 degrees.

Inner surface parts of the bridging portions of the second pair of electrically interconnected windings may abut outer surface parts of the bridging portions of the first pair of electrically interconnected windings. Thus, the bridging portions of the second pair of electrically interconnected windings may be positioned on the outside of the bridging portions of the first pair of electrically interconnected windings. However, the opposing axially extending winding portions of the third and fourth windings may be positioned on a substantially circular virtual path on which the first and second windings are also positioned. The centre of this substantially circular virtual path may coincide with the centre rotor axis. Thus, in a cross-sectional view the windings of the first and second pairs of windings may form a substantially circular structure.

As with the first and second windings, the third and fourth windings may be electrically interconnected so that electrical currents flowing in two abutting or neighbouring axially extending winding portions generate magnetic fields in essentially the same directions. This may be achieved by electrically connecting the third and the fourth winding in series.

Again, an opening may exist between abutting or neighbouring bridging portions of the third and fourth windings.

A third stator winding may further comprise a third pair of electrically interconnected windings, said third pair comprising fifth and sixth windings each comprising opposing axially extending winding portions and opposing bridging portions connecting the opposing axially extending winding portions, wherein the opposing axially extending winding portions of the fifth winding abut respective opposing axially extending winding portions of the sixth winding.

Similar to the first and second pairs of electrically interconnected windings, the third pair of electrically interconnected windings may comprise winding connections adapted to be electrically connected to an electronic control circuit.

The third pair of electrically connected winding may form a radial oriented symmetry axis being defined by abutting or neighbouring bridging portions of the fifth and sixth windings. The spatial orientation of the radial symmetry axis of the third pair may be different from the orientation of the radial symmetry axis of the second pair. Preferably, the radial symmetry axes of the first, second and third pairs of windings are angularly separated by an angle within the range 50-70 degrees, such as approximately 60 degrees. Thus, in the preferred embodiment the radial symmetry axes of the first, second and third pair of windings are evenly distributed with approximately 60 degrees between each of the axes.

Obviously, additional pairs of windings may be added to the stator winding arrangement of the miniature electro-dynamic motor according to the present invention. Thus, even though the stator winding arrangement according to the present invention has been disclosed having up to six individual windings grouped in three pairs of windings the number of individual windings may be higher than six.

As previously stated, it is an advantage of the stator winding arrangement of the miniature electro-dynamic motor according to the present invention that the individual pairs of windings are individually accessible whereby the operation and the controlling of an electro-mechanical device applying the miniature electro-dynamic motor becomes more flexible.

It is a further advantage of the stator winding arrangement of the miniature electro-dynamic motor according to the present invention that the individual pairs of windings may be connected in parallel. Thus, the first, second and optionally the third pairs of windings may be connected in parallel. An advantage of having all three pairs of windings connected in parallel is that the start-up time becomes very short. Even further, by having all three pairs of windings connected in parallel a position determining arrangement for determining the angular position of the rotor can be omitted.

The inner surface parts of the bridging portions of the third pair of electrically interconnected windings may abut outer surface parts of the bridging portions of the second pair of electrically interconnected windings. Thus, the bridging portions of the third pair of electrically interconnected windings may be positioned on the outside of the bridging portions of the second pair (and first pair) of electrically interconnected windings. However, the opposing axially extending winding portions of the fifth and sixth windings may, in a cross-sectional view, form a substantially circular structure with the opposing axially extending winding portions of the first, second, third and fourth windings.

The fifth and sixth windings may be electrically interconnected so that electrical currents flowing in two abutting or neighbouring axially extending winding portions generate magnetic fields in essentially the same directions.

Again, openings may exist between abutting bridging portions of the fifth and sixth windings. These openings may be provided by bridging winding portions comprising curved sections. For obvious reasons, each of the axially extending winding portions may comprise a linear sect ion.

The miniature electro-dynamic motor may further comprising an electronic control circuit for generating and providing individual electrical drive signals to each of the plurality of electrically conductive stator windings. The electronic control circuit may comprise an ASIC. In addition to drive signals the electronic control circuit may also generate signals for bringing the rotor of the miniature electro-dynamic motor to still stand. Such signals may involve changing the polarity of one or more drive signals provided to one or more stator windings.

The miniature electro-dynamic motor may further comprise a magnetically permeably axially extending housing portion, and a front and a rear bearing adapted to arrange the rotor shaft centrally relative to the magnetically permeable axially extending housing portion. The magnetically permeably axially extending housing portion may take a substantially cylindrical shape.

The permanent annular magnet may be fixedly arranged relative to the centre shaft by means of an injection mouldable material positioned between the rotor shaft and the permanent annular magnet.

The injection mouldable material may form axial alignments members exterior to the permanent annular magnet, the axial alignment members being arranged to abut inner surfaces of the front and rear bearings to ensure proper axial alignment of the permanent annular magnet relative to the magnetically permeable axially extending housing portion. The front and rear bearings may comprise through-going openings adapted to receive the rotor shaft, wherein inner diameters of the through-going openings are dimensioned to approximately match outer diameter of the rotor shaft. By approximately match is meant that the rotor shaft should be free to rotate, but the through-going openings in the front and rear bearings should, at the time, secure proper positioning of the rotor shaft relative to the magnetically permeably axially extending housing portion.

The front and rear bearings may be cylindrically shaped in an axial direction so as to fit an interior cylindrically shaped surface portion of the magnetically permeably axially extending housing portion. The magnetically permeably axially extending housing portion may further comprise a substantially plane exterior surface portion. The front and rear bearings may comprise through-going openings in order secure proper ventilation of the interior of the motor and/or to allow electrical wires to enter/leave the interior of the motor. These through-going openings may be conically shaped in the axial direction of the front and rear bearings.

In a second aspect, the present invention relates to a vibrator comprising a miniature electro-dynamic motor according the first aspect of the present invention. The vibrator may further comprise a weight fixedly arranged to the rotor shaft in an asymmetric manner.

### BRIEF DESCRIPTION OF THE DRAWINGS

The present invention will now be explained with reference to the accompanying figures, wherein
Fig. 1 shows the arrangement of a first pair of stator windings,
Fig. 2 shows the arrangement of a second pair of stator windings,
Fig. 3 shows the arrangement of a third pair of stator windings,
Fig. 4 shows an assembled stator winding arrangement,
Fig. 5 illustrates the magnetic flux lines in a cross-sectional view of a motor,
Fig. 6 illustrates how a pair of windings are electrically interconnected,
Fig. 7 shows how bearings are arranged in the cylindrical housing element, and
Fig. 8 shows a final vibrator according to the present invention.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

In its broadest aspect the present invention relates to a miniature electro-dynamic motor for electro-mechanical devices, such as miniature vibrators, pumps etc. The winding arrangement of the miniature electro-dynamic motor according to the present invention comprises individually accessible stator windings being arranged so that the generated rotating magnetic field extends over approximately 2/3 of the stator which significantly eases the operation of vibrators applying a miniature electro-dynamic motor according to the present invention in that specific starting procedures or processes can be avoided.

The miniature electro-dynamic motor according to the present invention is electrically coupled to an electronic control circuit adapted to generate and provide individual electrical drive signals to each of a plurality of stator windings. The electronic control circuit typically involves an ASIC which may be integrated with the miniature electro-dynamic motor.

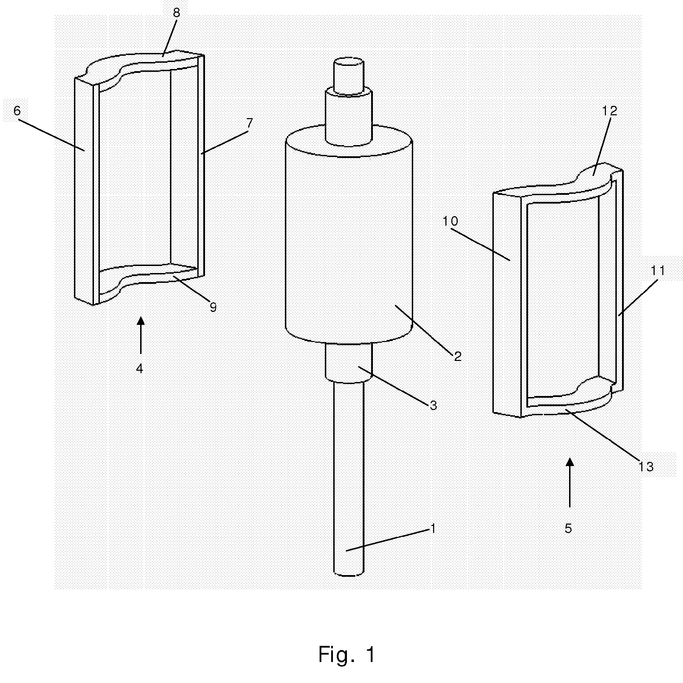

Referring now to Fig. 1 a rotor shaft 1, a permanent annular magnet 2 and a fixation element 3 is shown. The fixation element 3 fixates the permanent annular magnet 2 to the rotor shaft 1. As seen the permanent annular magnet 2 takes the form of a cylinder with magnetic poles (not shown) arranged in the radial direction of the permanent annular magnet. The permanent annular magnet is a Neodymium (N45H or equivalent) magnet.

The permanent annular magnet 2 is fixated to the rotor shaft 1 by positioning the rotor shaft 1 in a centre opening in the permanent annular magnet 2 so that the rotor shaft 1 has free ends on both sides of the permanent annular magnet 2. The lengths of these free ends are different causing a short end and a long end of the rotor shaft 1 to exist on opposing sides of the permanent annular magnet 2. In case of a vibrator, the long end of the rotor shaft 1 is adapted to be attached to a weight which, upon rotation thereof, generates mechanical vibrations due to its asymmetric mounting to the rotor shaft 1. When the permanent annular magnet 2 and rotor shaft 1 are properly aligned relative to each other, the fixation element 3 is injection moulded. Suitable materials are E130i-nature or another easy injectable material.

Alternatively, the long end of the rotor shaft 1 can be operatively connected to a gear arrangement which again can be operatively connected to another electro-mechanical device.

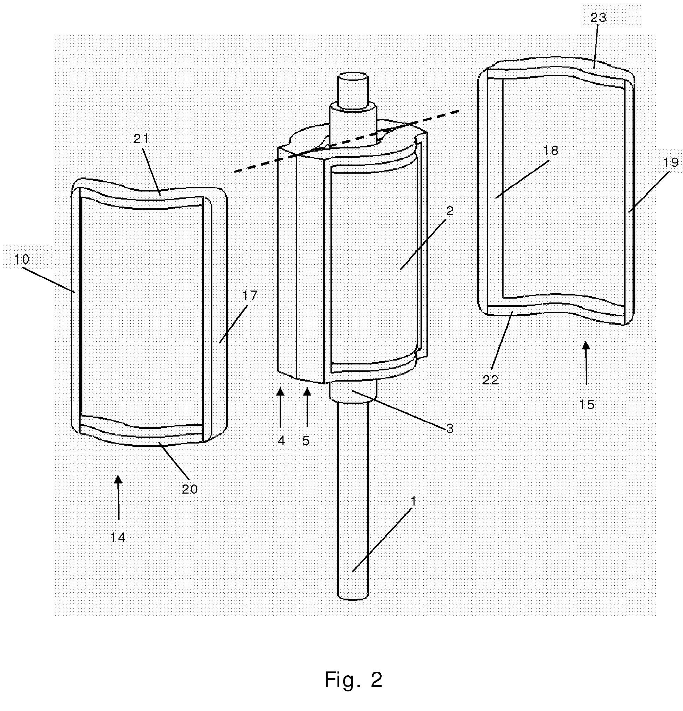

In Fig. 1 windings 4, 5 are also depicted. Each of windings 4, 5 comprises a pair of opposing axially extending portions 6, 7 and 10, 11, and a pair of opposing bridging portions 8, 9 and 12, 13 interconnecting the opposing axially extending portions. The bridging portions 8, 9 and 12, 13 are curved so that when windings 4, 5 are assembled an opening between the bridging portion 8, 9 and 12, 13 is formed. This opening is adapted to house the fixation element 3 as depicted in Fig. 2.

The windings 4, 5 may be constituted by a wounded wire, such as a 0.04 mm copper enamelled wire. The number of turns per winding varies in accordance with specific demands. In case of a miniature vibrator, the permanent annular magnet 2 can have a diameter of 3.1 mm with a centrally positioned 1 mm (diameter) through-going hole. The length of the permanent annular magnet 2 can for miniature vibrator applications be 4.8 mm. The overall dimensions of a miniature vibrator will typically be 4.5 mm in diameter and a length of around 9 mm.

Fig. 2 shows how the windings 4, 5 are mounted on an assembly comprising the rotor shaft 1, the fixation element 3 and the permanent annular magnet 2 leaving an air gap between the axially extending portions of the windings 4, 5 and the permanent annular magnet 2. As seen, the opposing axially extending portions of the windings 4, 5 are essentially parallel with the curved exterior surface portion of the cylindrically shaped permanent annular magnet 2. The bridging portions of the windings 4, 5 essentially follow the plane end portions of the permanent annular magnet 2.

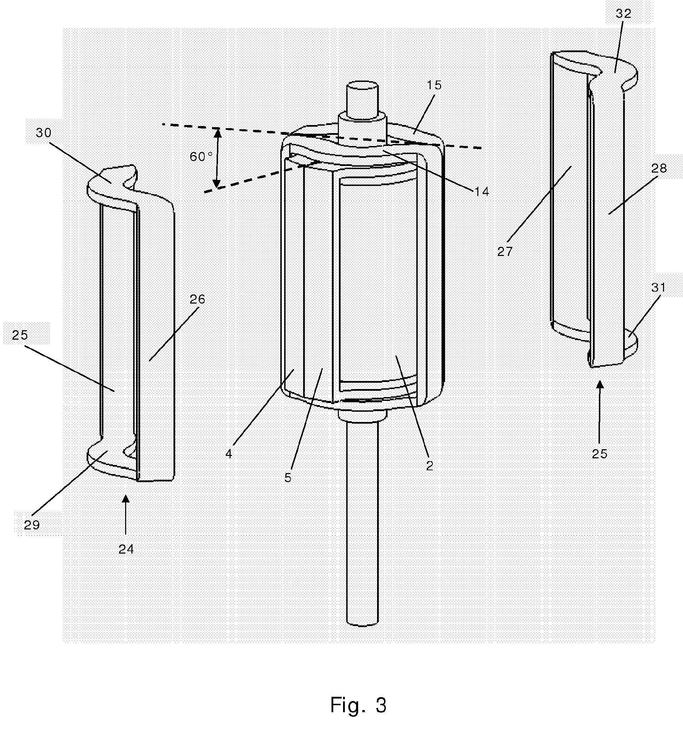

Fig. 2 also shows a second pair of windings 14, 15 each having respective opposing axially extending portions 16, 17 and 18, 19. Also, each of the windings 14, 15 comprises respective bridging portions 20, 21 and 22, 23. The bridging portions 20, 21 and 22, 23 of the windings 14, 15 are adapted to be positioned on the outside of the bridging portions of the windings 4, 5 - see Fig. 3. In Fig. 2 a symmetry axis, defined by the orientation of the windings 4, 5, is shown as a dashed line.

As seen in Fig. 3 the windings 14, 15 are off-set at an angle of about 60 degrees relative to the windings 4, 5. The opposing axially extending portions of the windings 14, 15 form an air gap with the permanent annular magnet 2.

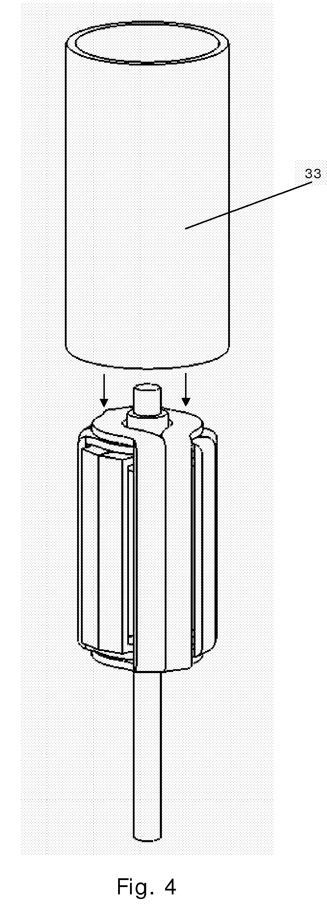

Fig. 3 also depicts windings 24, 25 with respective opposing axially extending portions 25, 26 and 27, 28, and respective bridging portions 29, 30 and 31, 32. The bridging portions 29, 30 and 31, 32 of the windings 24, 25 are adapted to be positioned on the outside of the bridging portions of the windings 14, 15 - see Fig. 4. As seen in Fig. 4 the windings 24, 25 are off-set at an angle of about 60 degrees to the windings 14, 15. The opposing axially extending portions of the windings 24, 25 form an air gap with the permanent annular magnet 2. Fig. 4 also shows a magnetically permeable housing element 33 which is adapted to be positioned concentrically with the assembled stator windings as indicated by the arrow. The housing element 33 preferably comprises a ferromagnetic compound.

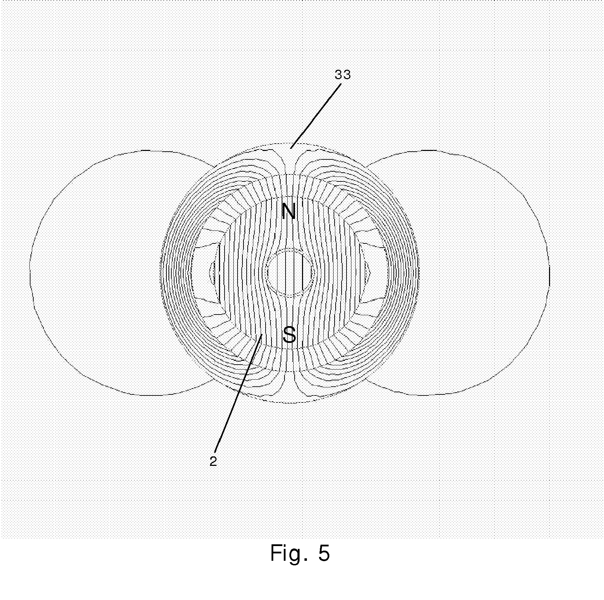

The cylindrically shaped housing element 33 not only encapsulates and protects the assembled stator windings, it also provides a magnetic return path as indicated in Fig. 5. Fig. 5 also depicts the direction of magnetization of the permanent annular magnet 2 and the associated flux lines in a cross-sectional view of the miniature electro-dynamic motor. In addition to providing a necessary magnetic return path the cylindrically shaped housing element 33 also ensures proper cooling of the stator windings in that the stator windings abut an interior surface of the housing element 33.

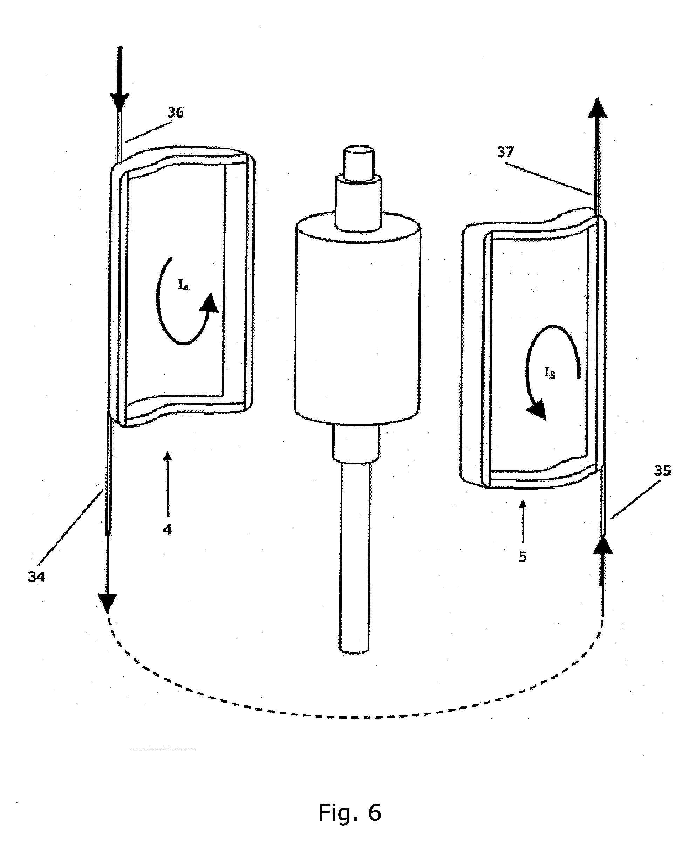

Fig. 6 shows how windings 4, 5 are interconnected. As indicated by the arrows and the dashed line the wire end 34 of winding 4 is electrically connected to wire end 35 of winding 5.

Thus, windings 4, 5 generate magnetic fields in the same direction in response to a drive signal provided to wire end 36. The directions of current flow in windings 4 and 5 are indicated by notations I₄ and I₅, respectively. Wire end 37 is, along with wire end 36, connected to the electronic control circuit. Thus, according to the present invention two stator windings, say stator windings 4, 5, are electrically interconnected to form a pair of stator windings, said pair of stator windings being provided with an individual and separate drive signal which may be different from drive signals provided to other pairs of stator windings.

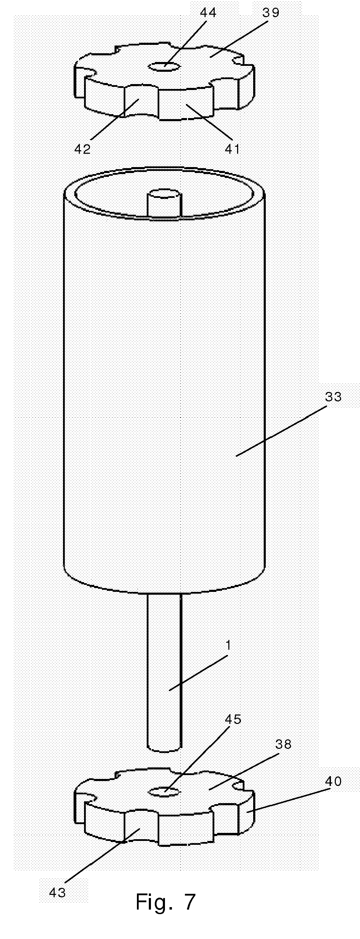

Fig. 7 illustrates how bearings 38, 39 are positioned in the cylindrical housing element 33. The edge surface portions 40, 41 of the bearings 38, 39 are cylindrically shaped so as to match the interior surface profile of the housing element 33 whereby the bearings 38, 39 can be kept in position within the housing element 33 without the adding of further fixation means. Centrally positioned openings 44, 45 are adapted to receive the rotor shaft 1 and to maintain the rotor shaft 1 in a fixed radial relationship to the housing element 33. In order to secure proper ventilation of the interior of the vibrator motor depicted in Fig. 7 and to allow electrical access to and from the interior of the motor through-going openings 42, 43 are provided in the bearings 38, 39. The curved inner surface portions the through-going openings 42, 43 can advantageously be conically shaped so that electrical wires to and from the interior of the vibrator can be kept in a fixed relationship with the motor. Thus, the through-going openings 42, 43 can function as pull reliefs.

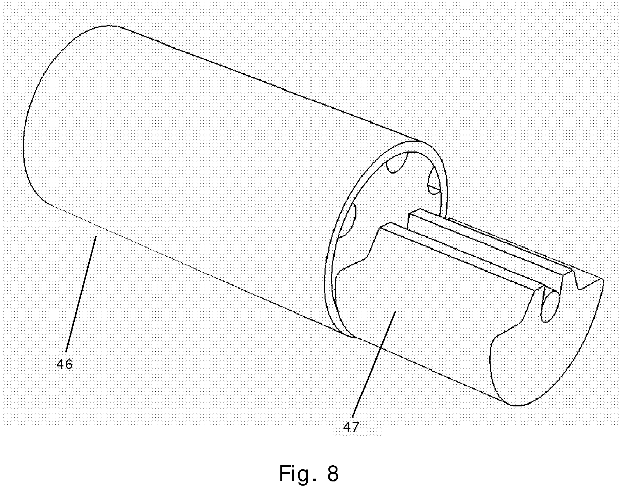

Fig. 8 shows a complete vibrator according to one aspect of the present invention. As seen the vibrator comprises a miniature electro-dynamic motor 46 comprising a winding assembly as previously described and a weight 47 attached to the rotor shaft of the motor 46. The weight can in principle take any form as long as its mass distribution is asymmetric relative to the rotor shaft.

## Claims

1. A miniature electro-dynam ic motor comprising substantially concentrically arranged stator and rotor parts relative to a centre rotor axis, wherein the rotor part comprises a rotatably mounted permanent annular magnet fixedly arranged to a rotor shaft, and wherein the stator part comprises a plurality of electrically conductive stator windings having respective pairs of winding connections for individual receipt of electrical drive signals.

2. A miniature electro-dynam ic motor according to claim 1, wherein a first stator winding comprises a first pair of electrically interconnected windings, said first pair comprising first and second windings each comprising opposing axially extending winding portions and opposing bridging portions connecting the opposing axially extending winding portions, wherein the opposing axially extending winding portions of the first winding abut respective opposing axially extending winding portions of the second winding.

3. A miniature electro-dynamic motor according to claim 2, wherein the first and second windings are electrically interconnected so that electrical currents flowing in abutting axially extending winding portions generate magnetic fields in essentially the same directions.

4. A miniature electro-dynamic motor according to claim 2 or 3, wherein openings exist between abutting bridging portions of the first and second windings, said openings being adapted to receive the rotor shaft.

5. A miniature electro-dynam ic motor according to any of claims 2-5, wherein a second stator winding comprises a second pair of electrically interconnected windings, said second pair comprising third and fourth windings each comprising opposing axially extending winding portions and opposing bridging portions connecting the opposing axially extending winding portions, wherein the opposing axially extending winding portions of the third winding abut respective opposing axially extending winding portions of the fourth winding.

6. A miniature electro-dynamic motor according to claim 5, wherein each of the first and second pairs of electrically connected windings forms a radial oriented symmetry axis, the radial symmetry axes being defined by abutting bridging portions, wherein an orientation of the radial symmetry axis of the first pair is different from an orientation of the radial symmetry axis of the second pair.

7. A miniature electro-dynamic motor according to claim 5 or 6, wherein inner surface parts of the bridging portions of the second pair of electrically interconnected windings abut outer surface parts of the bridging portions of the first pair of electrically interconnected windings.

8. A miniature electro-dynamic motor according to any of claims 5-7, wherein the third and fourth windings are electrically interconnected so that electrical currents flowing in abutting axially extending winding portions of the third and fourth windings generate magnetic fields in essentially the same directions.

9. A miniature electro-dynamic motor according to any of claims 5-8, wherein openings exist between abutting bridging portions of the third and fourth windings.

10. A miniature electro-dynamic motor according to any of claims 5-9, wherein a third stator winding comprises a third pair of electrically interconnected windings, said third pair comprising fifth and sixth windings each comprising opposing axially extending winding portions and opposing bridging portions connecting the opposing axially extending winding portions, wherein the opposing axially extending winding portions of the fifth winding abut respective opposing axially extending winding portions of the sixth winding.

11. A miniature electro-dynamic motor according to claim 10, wherein the third pair of electrically connected winding forms a radial oriented symmetry axis being defined by abutting bridging portions of the fifth and sixth windings, wherein an orientation of the radial symmetry axis of the third pair is different from the orientation of the radial symmetry axis of the second pair.

12. A miniature electro-dynamic motor according to claim 10 or 11, wherein inner surface parts of the bridging portions of the third pair of electrically interconnected windings abut outer surface parts of the bridging portions of the second pair of electrically interconnected windings.

13. A miniature electro-dynamic motor according to any of claims 10-12, wherein the fifth and sixth windings are electrically interconnected so that electrical currents flowing in abutting axially extending winding portions of the fifth and sixth windings generate magnetic fields in essentially the same directions.

14. A miniature electro-dynamic motor according to any of claims 10-13, wherein openings exist between abutting bridging portions of the fifth and sixth windings.

15. A miniature electro-dynamic motor according to any of claims 2-14, wherein each of the bridging winding portions comprises a curved section.

16. A miniature electro-dynamic motor according to any of claims 2-15, wherein each of the axially extending winding portions comprises a linear section.

17. A miniature electro-dynamic motor according to any of the preceding claims, further comprising an electronic control circuit for generating and providing individual electrical drive signals to each of the plurality of electrically conductive stator windings.

18. A miniature electro-dynam ic motor according to claim 17, wherein the electronic control circuit comprises an ASIC.

19. A miniature electro-dynamic motor according to any of the preceding claims, further comprising a magnetically permeably axially extending housing portion, and a front and a rear bearing adapted to arrange the rotor shaft centrally relative to the magnetically permeable axially extending housing portion.

20. A miniature electro-dynamic motor according to claim 19, wherein the permanent annular magnet is fixedly arranged relative to the centre shaft by means of an injection mouldable material positioned between the rotor shaft and the permanent annular magnet.

21. A miniature electro-dynamic motor according to claim 20, wherein the injection mouldable material forms axial alignments members exterior to the permanent annular magnet, the axial alignment members being arranged to abut inner surfaces of the front and rear bearings to ensure proper axial alignment of the permanent annular magnet relative to the magnetically permeable axially extending housing portion.

22. A miniature electro-dynam ic motor according to any of claims 19-21, wherein the front and rear bearings comprise through-going openings adapted to receive the rotor shaft, wherein inner diameters of the through-going openings are dimensioned to approximately match outer diameter of the rotor shaft.

23. A miniature electro-dynamic motor according to any of claims 19-22, wherein exterior surface parts of the front and rear bearings are cylindrically shaped in order to match a cylindrically shaped interior surface portion of the magnetically permeable axially extending housing portion.

24. A miniature electro-dynamic motor according to any of claims 19-23, wherein an exterior surface portion of the magnetically permeable axially extending housing portion is substantially plane.

25. A miniature electro-dynamic motor according to any of claims 19-24, wherein the front and rear bearings comprise through-going, conically shaped ventilation openings.

26. A vibrator comprising a miniature electro-dynamic motor according to any of the preceding claims, the vibrator further comprising a weight fixedly arranged to the rotor shaft in an asymmetric manner.
